(19) Europäisches Patentamt
European Patent Office
Office européen des brevets

(11) Publication number: **0 159 482 A2**

# (12) EUROPEAN PATENT APPLICATION

(21) Application number: **85101606.3**

(22) Date of filing: **14.02.85**

(51) Int. Cl.⁴: **C 08 L 63/00**, C 08 J 5/04 // (C08L63/00, 79:08)

(30) Priority: **28.03.84 US 594448**

(43) Date of publication of application: **30.10.85 Bulletin 85/44**

(84) Designated Contracting States: **AT BE CH DE FR GB IT LI NL SE**

(71) Applicant: **AMERICAN CYANAMID COMPANY, 1937 West Main Street P.O. Box 60, Stamford Connecticut 06904 (US)**

(72) Inventor: **Susman, Samuel Eugene, 1316 Turret Road, Bel Air Maryland 21014 (US)**
Inventor: **Hirschbuehler, Kevin Richard, 503 East Broadway, Bel Air Maryland 21014 (US)**

(74) Representative: **Wächtershäuser, Günter, Dr., Tal 29, D-8000 München 2 (DE)**

## (54) Resin matrix composites with controlled flow and tack.

(57) Curable fiber resin matrix composites comprising epoxide prepolymers and organic polyamines modified with a heat- and moisture-resistant resin to control flow and tack are disclosed. The cured fiber resin matrix composites exhibit high toughness combined with excellent hot/wet strength.

EP 0 159 482 A2

ACTORUM AG

9,597

## RESIN MATRIX COMPOSITES WITH CONTROLLED FLOW AND TACK

## FIELD OF THE INVENTION

This invention relates to improved resin compositions. More particularly, it relates to curable resin compositions comprising reinforcing filaments and epoxy prepolymers combined with a polyamine curing agent and modified with a heat- and moisture-resistant resin effective for controlling the resin flow and tack.

## BACKGROUND OF THE INVENTION

Reinforced epoxy resin composites having high strength to weight ratios have found extensive use in the aircraft and aerospace industries, and in other applications where strength, corrosion resistance and light weight are desirable. For instance, fiber resin matrix materials have replaced aluminum and other metals in primary and secondary structures of modern military and commercial aircraft. Sporting equipment such as tennis rackets and golf clubs have also adopted fiber resin materials successfully. Since the advent of fiber resin matrix materials, much effort has been expended in improving their properties and characteristics, including the development of many different curing systems.

Epoxy resins cured with polyamines, such as m-phenylenediamine, 4,4'-diaminodiphenylmethane, 4,4'-diaminodiphenyl sulfone, 1,3-propylene bis(p-aminobenzoate), alone, or in combination with curing catalysts such as the reaction product of toluenediisocyanate and dimethylamine or a boron trifluoride-amine complex, represent the state of the art of matrix resins, because of their toughness and retention of stiffness under hot/wet conditions after curing. This makes them uniquely suitable for aircraft structural applications.

Fiber resin matrix composites still exhibit some disadvantages, however, especially if the reinforcing fiber comprises graphite or carbon. "Prepregs", which are the precursors of the final shaped and cured articles, are generally in the form of sheets or tapes of fibers impregnated with the uncured or partially cured resin composition. Such prepregs are generally manufactured by a continuous process in which an array of fibers is coated with the resin in liquid form or dissolved in a solvent.

Because the individual reinforcing fibers are very fragile, and uncured epoxy resins can be very viscous and sticky, the "tack" of a fiber resin matrix composite prepreg makes it susceptible to tearing or splitting when removed from storage reels or handled in shaping a structural part. Tack is a well-recognized quality of prepreg rovings, tapes and fabrics to those in the art. It is related to drape and describes the physical properties of a prepreg which will allow the successful building, or "lay-up", of a structural part. Tack is affected by many properties, including the type and stiffness of the reinforcing fiber, the stiffness of the configuration of fibers (e.g., weave style, fabric thickness, etc.), resin content and volatiles content of the prepreg, the formulation, softness and viscosity of the resin, and other properties. The importance of tack in the construction of a given article will also vary with such external variables as the temperature of the prepreg, the temperature of the cure form (tool), the complexity of the cure form (e.g., radius of curvature of the part, draw of the cured form, etc.), and the personal preferences of the user.

Another quality of concern to those working with prepreg materials is "flow", or the tendency of the epoxy resin to squeeze out of the matrix during forming and curing. Flow is affected by many of the same variables as tack and especially by the curing conditions, including the heat-up rate, cure pressure, caul sheet, bleeder system, and edge barrier system. It is desirable that a fiber resin matrix system have sufficient flow to provide the wanted surface quality and density in the finished part, while avoiding excess resin flow which would necessitate trimming of the part and extra tool cleaning or replacement.

Previously, flow has been controlled to some extent by careful attention to temperature and pressure during curing, or by the use of polymeric additives to the resin. However, closely regulating the curing process requires some expertise and adds unwanted complexity to the manufacturing operation, and resin additives frequently have adverse effects on the ultimate performance of the fiber resin matrix.

The use of polymeric modifiers has achieved a considerable amount of attention from the standpoint of modifying properties such as interlaminar bond strength. See, for example, the above-mentioned copending applications Serial No. 518,871, filed August 1, 1983 and Serial No. 572,263, filed January 19, 1984, and Frigstad, U.S. 3,472,730, wherein the modifying resins are nylons, polyurethanes or carboxylated butadiene-acrylonitrile copolymers, and the like. Such modifiers, however, have a somewhat adverse effect on other physical properties and mechanical strength of composite matrix resins and, unless the flow is controlled by means disclosed in the said copending applications, there are serious problems encountered in forming the ultimate shapes.

Also to be mentioned in this connection are the use of resin modifiers such as polyhydroxyethers and polyimides, especially polyetherimides. See the above-mentioned copending applications Serial No. 518,863 and applicants' Serial No. 518,875, both commonly assigned, and filed on August 1, 1983. Such resins are disclosed to be added in an amount sufficient to impart improvements in mechanical properties, especially toughness, while preserving substantial resistance to failure under hot/wet conditions. There is no indication of any effect of the resin modifiers on the tack or flow of the fiber resin matrix prepreg.

It has now been discovered that it is possible to easily provide variable flow and controllable tack in fiber resin matrix composites without adversely affecting physical and mechanical properties. This is accomplished by selecting a heat- and moisture-resistant modifying resin and combining it with the epoxy resin composition, which includes a polyamine curing agent and, optionally, a curing catalyst. These results are obtained when using any given epoxy resin/curing agent/ (optional) curing catalyst composition. Variations in flow and tack can be achieved simply by changing the level of modifying resin. By so doing, a whole family of prepregs with predetermined flow and tack can be produced in conventional equipment to meet nearly any requirement for flow and tack. There are thus provided pliable, but releaseable prepreg rovings, tapes and fabrics which are not appreciably susceptible to splitting during unwinding even at modest tack levels and which also have lowered, but optimized, flow levels very suitable for shaping composites. The concept is compatible with many modern epoxy resin formulations, covering, for example, formulations cured at both 250°F as well as 350°F The invention thus provides a variety of practical fiber resin matrix composites as well as more processable prepreg formulations, without requiring alterations of the cure chemistry or adversely affecting ultimate performance.

For the purposes of the present invention, the aforementioned rovings, tapes and fabrics refer to the following common configurations of prepreg fiber resin matrix materials:

A roving is generally a single, continuous, resin-preimpregnated strand produced by wetting a fiber bundle in a continuous application (i.e., by dipping or drawing) of an epoxy resin solution. The quanity of

resin applied may be regulated by controlling resin solids and metering the strand gauge. The newly coated strand is typically fed through a heated, ventilated tower to remove solvents, and then cooled and wound on a suitable spool or core.

A tape is generally a resin-impregnated unidirectional array of one or more rows of collimated reinforcing fibers. The tape is typically produced by delivering individual fibers through conventional eye boards to form a densely packed array, which is in turn mated with resin-coated release paper and run through a heated, pressurized roller to cause complete impregnation of the fiber array with resin, and finally trimmed and wound on a circular core.

A prepreg fabric is generally a mesh or web of poly-directional reinforcing filaments wetted with an epoxy resin solution, e.g., by continuous dipping. The quantity of coating material may be regulated by controlling resin solution solids and with a metering system on the fabric. After removing excess solvents, prepreg fabric sheeting is typically wound with a separator film onto a suitable cure.

As a result of the foregoing discovery, the tack of an uncured prepreg can be tailored over essentially a full spectrum of tackiness by varying the quantity of resin modifier (e.g., ULTEM®, General Electric Co.), without any appreciable effect on the other properties of the prepreg. With a low resin modifier content, e.g., 2 parts modifier to 100 parts epoxy resin composition, by weight, a very tacky prepreg is produced. At a high modifier content, e.g., 10 parts modifier to 100 parts epoxy resin, a prepreg with very little tackiness is provided.

In general, it has been found that the different types of prepreg materials are most easily handled at

different levels of tackiness, other factors being equal. For example, fabric prepreg materials are advantageously handled when very tacky, whereas tape prepreg materials are best handled when tackiness is virtually absent, and roving prepreg materials are easily handled when slightly tacky. By way of illustration, therefore, a prepreg formulation particularly well suited to fabric applications might include 100 parts (by weight) epoxy resin composition (which includes curing agents and optional catalysts) and 2-4 parts modifying resin; a formulation for a tape might contain 100 parts epoxy resin composition and 1-20 parts modifying resin; and a formulation for a roving might contain 100 parts epoxy resin composition and 4-16 parts modifying resin.

## SUMMARY OF THE INVENTION

According to the present invention, there are provided fiber resin matrix composites comprised of:

(a) reinforcing filaments, and

(b) a heat-curable epoxy resin composition comprising:

(i) an epoxy prepolymer or combination of prepolymers having more than one epoxide group per molecule,

(ii) an amount effective to promote cure of an amine-functional curing agent, and

(iii) a heat-resistant and moisture-resistant modifying resin component blended and alloyed with (b)(i) and (ii) in an amount at least sufficient to control the tack of the composite before curing but not in excess of an amount which increases the flow

of component (b) above a level which adversely affects the resin density in the composite.

It is among the features of this aspect of the invention to provide such composites in the form of prepregs, for example, to make laminates and other structural shapes in accordance with procedures known in this art.

From the foregoing discussion of tack and flow, and the variety of factors influencing them, it will be clear to those skilled in the art that a wide range of concentrations of component (b)(iii) can be used, depending on the qualities desired. Sufficient amounts of the modifying resin disclosed herein must be employed to reduce the tack of the prepreg to the desired level, given the type of prepreg material (roving, tape, or fabric), the use to which it is to be put, and the working preferences of the user. In general, for the most common uses and conditions of use for state-of-the-art prepregs, it is preferred to employ an amount in the range of from about 1.5 to about 15 parts by weight per 100 parts by weight of components (b)(i) and (b)(ii) combined.

As mentioned previously, many polymer modifiers added to the epoxy resin composition detract from the physical and mechanical strength of the final fiber resin matrix composite. It is believed that this is at least partially due to a depression in the glass transition temperature, Tg, particularly wet Tg, caused by the addition of the modifiers. Accordingly, in preferred features of the invention the resin modifier component (b)(iii) will have a relatively high Tg, i.e., above about 180°C, but in any event component (b)(iii) will be selected so as not to adversely affect the toughness or the ultimate shear stress under hot/wet

conditions of the fiber resin matrix composite.

The glass transition temperature is determined by known methods, such as by dilatometry or differential scanning calorimetry (DSC). The wet glass transition temperature is measured in the same manner but after the cured fiber resin matrix sample has been conditioned prior to testing by immersion in distilled water for two weeks at 71°C. It is preferred for the purposes herein that the wet Tg of a fiber resin matrix composite containing the modifying resin (b)(iii) according to this invention will be at least about 90%, most preferably 90% to 100%, of the wet Tg of the corresponding fiber resin matrix composite without such modifying resin.

While the importance of flow to the overall perfomance of a fiber resin matrix composite is increasingly recognized in the art, there is as yet no standard or industry-wide test for quantifying it. However, a useful flow test for the purposes herein is described in the aforementioned applications, Serial No. 518,871 and Serial No. 572,263, and is performed as follows:

1. 4" x 4" plies of fabric are coated with a resin composition to be tested;

2. A laminate is formed by stacking four plies of the coated fabric;

3. The uncured laminate is weighed;

4. The laminate is press cured at 325°F and 60 psi for 15 minutes;

5. Any resin that has squeezed out beyond the edges of the fabric is trimmed away;

6. The cured, trimmed laminate is weighed; and

7. The "flow percent" for the resin composition sample is determined by subtracting the weight of the cured, trimmed laminate from the weight of the uncured laminate, dividing that difference by the weight of the

uncured laminate, and finally multiplying by 100.

The actual flow of the resin will of course change when coated on a different type of filament (e.g., graphite fibers) and at different coating amounts per square foot, as well as according to other factors mentioned previously, however it has been observed that for a variety of resin compositions, excellent results are obtained where the flow does not exceed about 12-14 percent. In any case, the flow of the resin composition should be sufficient to completely coat and penetrate, or "wet", the fiber matrix, that is, the reinforcing fibers must become completely imbedded in the resin matrix; however, the flow cannot be so great as to provide a non-uniform coating density about the fibers. By way of further illustration, for the fiber resin matrix composites shown in the working examples herein, the flow of the resin composition is preferably between about 5.5 percent and about 7.7 percent.

## DESCRIPTION OF THE DRAWINGS

FIGURE 1 is an enlarged cross-sectional view of a fiber resin matrix prepreg roving of the present invention.

FIGURE 2 is an enlarged cross-sectional view of a strip of the fiber resin matrix prepreg tape of the invention.

FIGURE 3 is an enlarged cross-sectional view of a fiber resin matrix prepreg fabric sheet according to the invention.

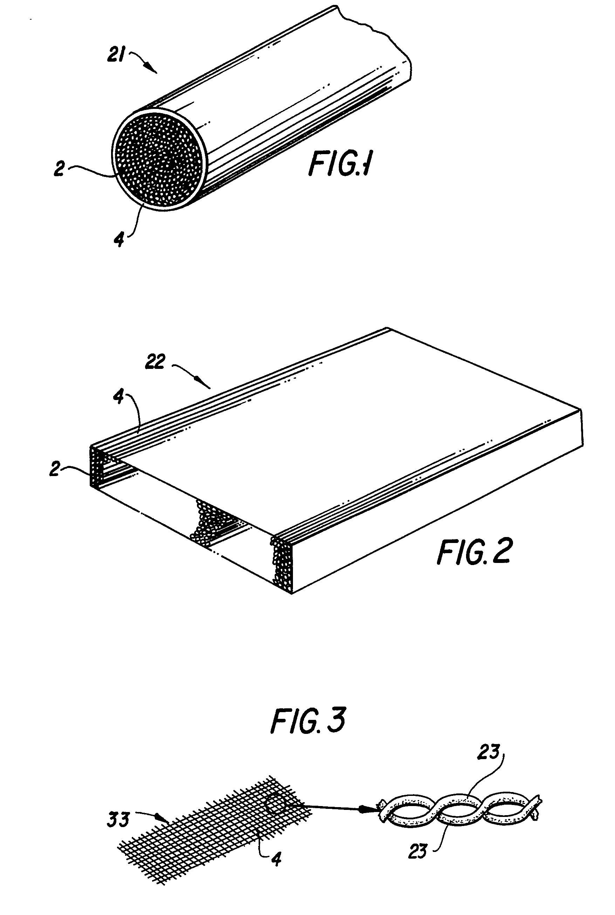

Each figure shows the characteristic confirguration of individual reinforcing filaments 2 for the respective prepreg forms --roving, tape and fabric. In FIGURE 1, individual reinforcing filaments 2 are arranged into a bundle 21 typically containing up to about 12,000 filaments, the bundle 21 and filaments 2

being completely impregnated with and coated by curable resin 4. In FIGURE 2, individual reinforcing filaments 2. form a flat, unidirectional band 22, and the band 22 of filaments 2 is completely impregnated and coated with curable resin 4. In FIGURE 3, the individual reinforcing filaments are arranged in tows 23 of about 1,000 to 12,000 filaments each, and the tows 23 are interwoven to form a fabric sheet 33, which fabric sheet 33 is completely impregnated and coated with curable resin 4.

DESCRIPTION OF THE PREFERRED EMBODIMENTS

In general, the epoxy resin compositions of this invention are prepared by mixing the polyepoxide compound (b)(i) with the polyamines (b)(ii) in conventional quantitative ratios, e.g., 1 epoxide equivalent for every 0.3 to 3.0 NH-equivalents, preferably 0.7 to 1.0 NH-equivalents, and especially preferably 0.7 to 0.9 NH-equivalents, optionally with heating, e.g., at a temperature in the range of 30° to 300°C., preferably at a temperature in the range of 80° to 180°C., until a melt is obtained. The NH-equivalents is the quantity of aromatic polyamine in grams in which 1 gram-atom of hydrogen combined with amine nitrogen is present. Catalysts, such as boron trifluoride-organic amine adducts, and the reaction product of toluene 2,4-diisocyanate and dimethylamine can also be included, in quantities of from, e.g., 0.1% to 5% by weight based on the total weight of the resin-polyamine, to accelerate curing. The modifying resin is also added in the desired amount to achieve flow and tack control.

The fiber resin matrix composites according to the present invention are prepared by embedding filaments, e.g., glass fibers and/or non-siliceous filaments in the curable resin composition to form a fiber resin matrix which can be manipulated and cured to a solid composite.

Particular selection of the filament material, epoxy prepolymer, curing agent, and modifying resin, as well as including optional ingredients such as fillers, dyes, catalysts, processing aids, etc., can give a range of curable compositions heretofore unknown in the art and exhibiting improved physical properties over known materials.

Glass filaments useful herein are well known. The non-siliceous filament component may be of any non-glass, non-silicon dioxide-containing material which improves the strength or other physical properties of the curable epoxy resin and modifying resin components. Such filaments include, but are not limited to, filaments comprised of carbon, graphite, silicon carbide, boron, aramid, polyester, polyamide, rayon, polybenzimidazole, polybenzothiazole, metal-coated such filaments, for example, nickel-coated and/or silver-coated graphite fibers and filaments, or combinations of such filaments. Fibers (woven or non-woven), tows or mats of such filaments, or tapes (unwoven, flat bundles of the unidirectional filaments) may be employed as desired. In applications demanding high stiffness-to-weight ratio or shear strength, carbon fibers, graphite filaments, polyaramid filaments or nickel-plated graphite filaments, as disclosed in assignee's copending application Serial No. 358,637, are most preferred.

The epoxy resins suitable for the present invention are compounds having more than one epoxide group per molecule available for reaction with the primary and secondary polyamine curing agents for use in the present invention. Such epoxy prepolymers include but are not limited to polyglycidyl ethers of polyvalent phenols, for example pyrocatechol; resorcinol; hydroquinone; 4,4'-dihydroxydiphenyl methane; 4,4'-dihydroxy-3,3'-dimethyldiphenyl methane; 4,4'-dihydroxydiphenyl dimethyl methane; 4,4'-dihydroxydiphenyl methyl methane; 4,4'-dihydroxydiphenyl cyclohexane; 4,4'-dihydroxy-3,3'-dimethyldiphenyl propane; 4,4'-dihydroxydiphenyl sulfone; or tris(4-hydroxyphenyl) methane; polyglycidyl ethers of the chlorination and bromination products of the above-mentioned diphenols; polyglycidyl ethers of novolacs (i.e., reaction products of monohydric or polyhydric phenols with aldehydes, formaldehyde in particular, in the presence of acid catalysts); polyglycidyl ethers of diphenols obtained by esterifying 2 mols of the sodium salt of an aromatic hydroxycarboxylic acid with 1 mol. of a dihalogenalkane or dihalogen dialkyl ether (U.K. 1,017,612); and polyglycidyl ethers of polyphenols obtained by condensing phenols and long-chain halogen paraffins containing at least 2 halogen atoms (U.K. 1,024,288).

Other suitable compounds include polyepoxy compounds based on aromatic amines and epichlorohydrin, for example N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; and N-diglycidyl-4-aminophenyl glycidyl ether. Special mention is made of N,N,N',N'-tetraglycidyl-1,3-propylene-bis(4-aminobenzoate).

Glycidyl esters and/or epoxycyclohexyl esters of aromatic, aliphatic and cycloaliphatic polycarboxylic acids, for example phthalic acid diglycidyl ester and adipic ester diglycidyl and glycidyl esters of reaction products of 1 mol of an aromatic or cycloaliphatic dicarboxylic acid anhydride and ½ mole of a diol or 1/n mole of a polyol with n hydroxyl groups, or hexahydrophthalic acid diglycidyl esters, optionally substituted by methyl groups, are also suitable.

Glycidyl ethers of polyhydric alcohols, for example of 1,4-butanediol; 1,4-butenediol; glycerol;

1,1,1-trimethylol propane; pentaerythritol and polyethylene glycols may also be used. Triglycidyl isocyanurate; and polyglycidyl thioethers of polyvalent thiols, for example of bis mercaptomethylbenzene; and diglycidyltrimethylene sulfone, are also suitable.

Preferably the epoxy prepolymer component will be selected from compounds having the idealized formula:

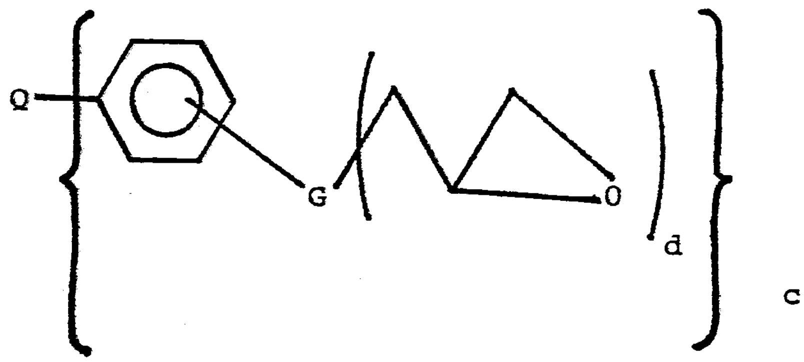

and halogen and alkyl substituted derivatives of such compounds, wherein c is 2, 3 or 4 and equal to the divalent, trivalent or tetravalent radical; G is -O-, NR'- or -N-; R is hydrogen or alkyl; and d is 1 or 2 depending on the valence of G.

The most preferred epoxy compounds will include the following:

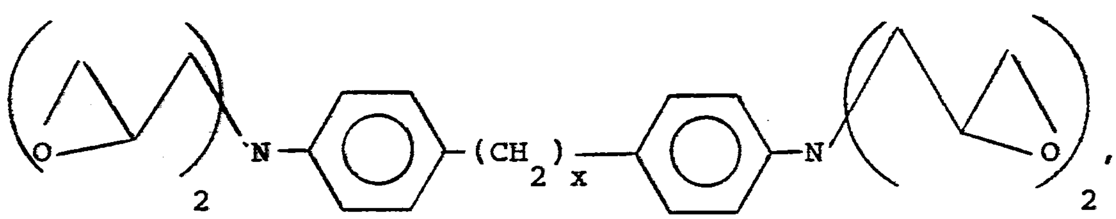

wherein x is an integer from 1 to 4 , available commercially (where x=1) as ARALDITE® MY-720 (Ciba-Geigy);

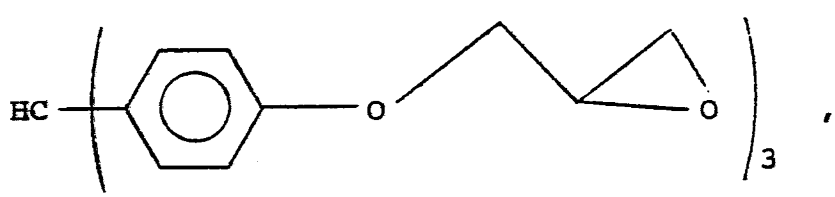

available commercially as XD 7342 (Dow Chemical);

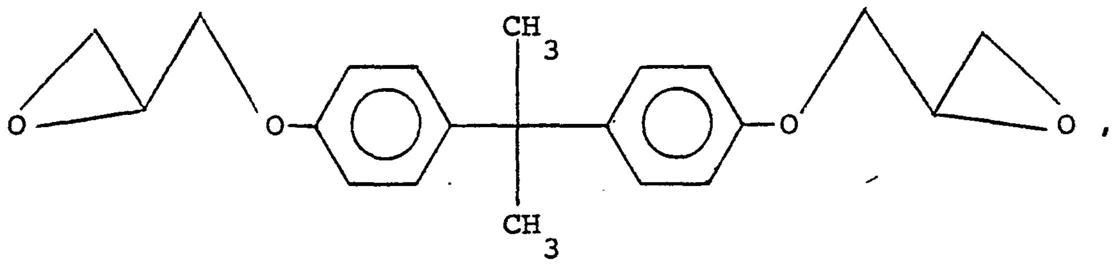

available commercially as DER 331 (Dow Chemical) or EPON® 828 (Shell);

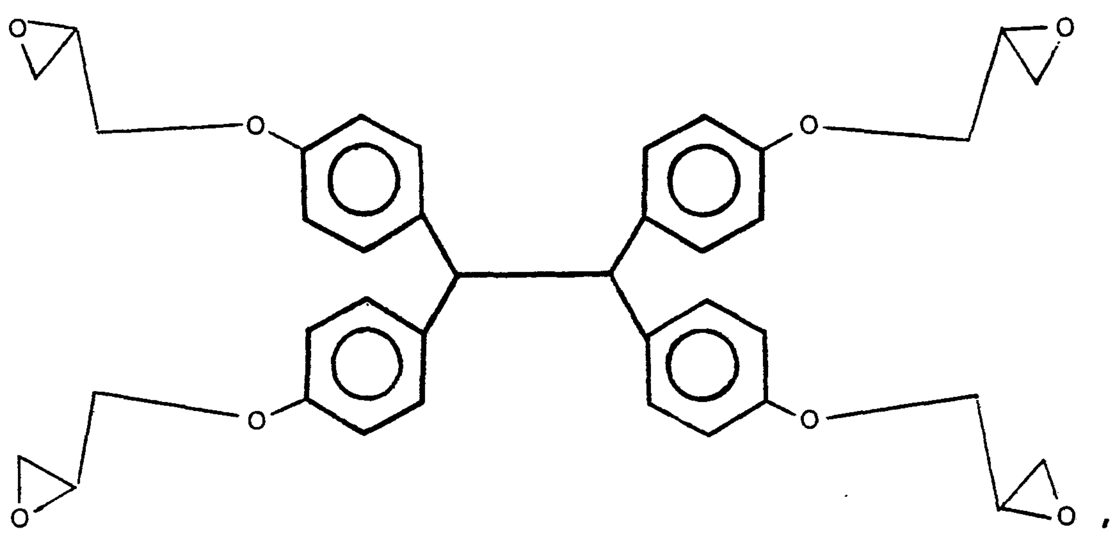

available commercially as EPON® 1031 (Shell);

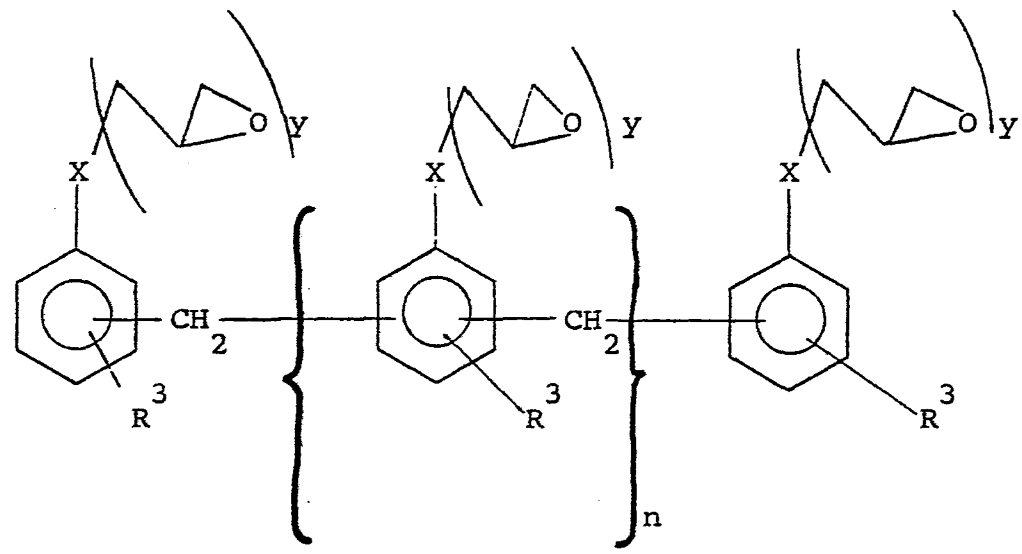

wherein Y is 1 or 2, X is -O-, -N-, $R^3$ is H or $CH_3$ and n is 2 to 8.

Compounds in which X is -O- are available as a mixture under the tradename DEN-438 from Dow Chemical Company.

Also preferred are triglycidyl ethers of meta- and para-hydroxyaniline, e.g., represented by the formula:

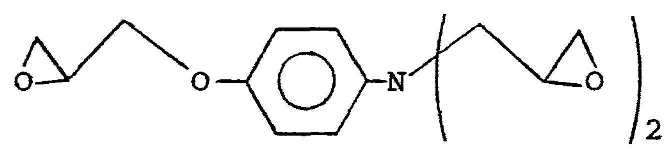

These are available under the tradename ARALDITE® 0500, 0510 from Ciba-Geigy.

The polyamines used in the present compositions may vary widely. In general, they will be of the formula:

$$X - (NHR)_a$$

wherein X is a divalent or trivalent organic radical or -N-, and R is hydrogen, alkyl or aryl. Preferably each NHR group is directly bonded to an aryl radical having from 6 to 20 carbon atoms or to a divalent radical of the formula:

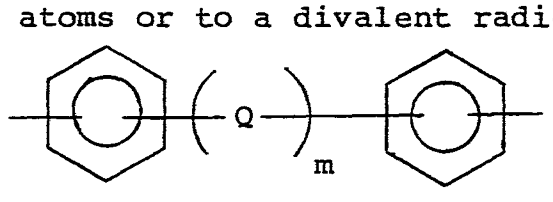

wherein Q is -O-, 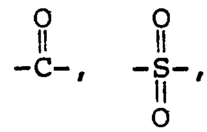 -S- or

$-C_xH_{2x}-$ where m is 0 or 1, and x is 1 to 5. Illustrative of such compounds are m-phenylenediamine, 4,4'-diaminodiphenyl methane, 4,4'-diaminodiphenyl sulfone, 3,3'-diaminodiphenyl sulfone, 4,4'-diaminodiphenyl ether, and the like. 4,4'-diaminodiphenyl sulfone is preferred.

Also useful are polyamine curing agents of the formula:

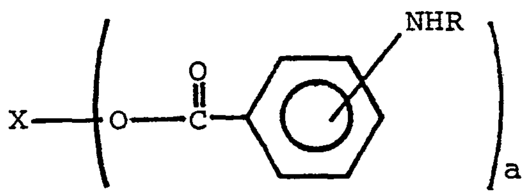

wherein a is 2 or 3, R is hydrogen, alkyl or aryl, and X is a divalent or trivalent organic hydrocarbon, hetero-interrupted hydrocarbon, or substituted hydrocarbon radical or -N- . They may be prepared from corresponding starting materials, e.g., nitro compounds, by reduction, for example, according to methods described in U.K. Patent 1,182,377.

In the most preferred compounds of this class, the primary diamine will include one or more of a compound of the formula:

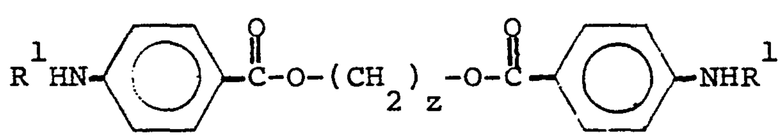

wherein $R^1$ is hydrogen or $C_1$-$C_6$ alkyl, e.g., methyl, and z is an integer of from 2 to 12, preferably 2 to 6, and most preferably 3. Also contemplated are the use of

such compounds in combination with other conventional polyamines such as methylene dianiline, phenylene diamine, m-diaminodiphenyl sulfone and the like.

The polyimides suitable for use as modifying resins can be made in conventional ways, and some are commercially available. For example, 3,4,3',4'-benzophenone dianhydride can be reacted with meta-phenylenediamine to form a polyimide.

Preferably, a polyetherimide will be used and these will have units of the general formula:

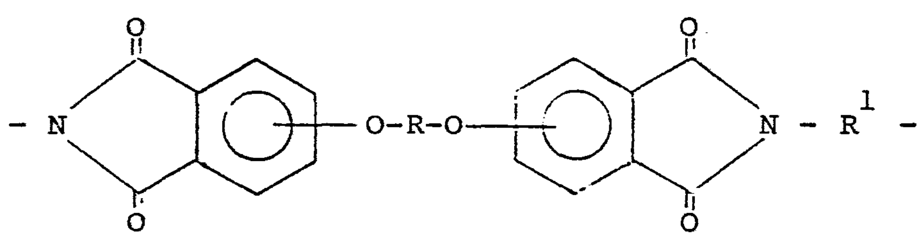

where R and $R^1$ are divalent organic radicals. These can be made in accordance with Takekoshi et al, U.S. 3,917,643, by reacting an aromatic bis ether anhydride with an organic diamine. The products are linear resins, highly heat- and moisture-resistant. The nature of R can vary, but preferably, it is a divalent organic radical of the type defined above as:

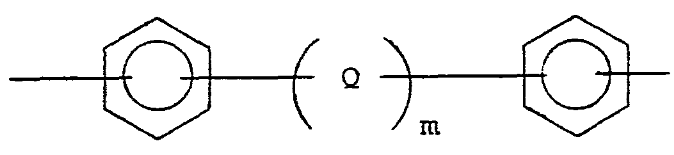

The nature of $R^1$ can likewise vary, but preferably it will be as defined for R in the immediately preceding formula, and especially preferably, it will be a divalent aromatic hydrocarbon radical having from 6 to 20 carbon atoms. The repeating units will be sufficient to provide

a molecular weight in the range of 5,000 to 300,000, and preferably in the range of 20,000 to 60,000.

In especially preferred embodiments, the polyetherimide will have units of the formula:

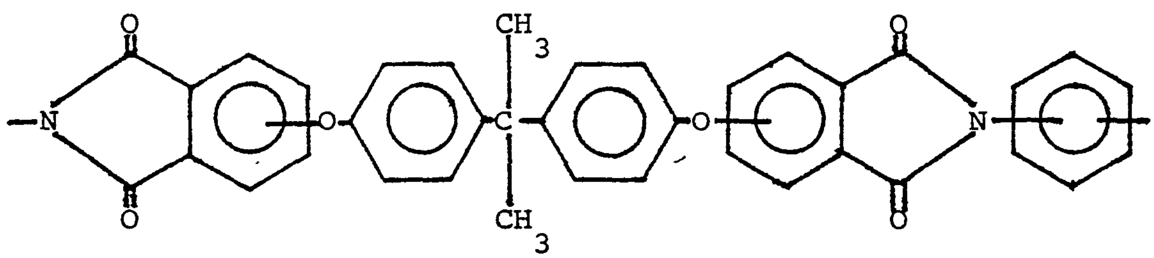

wherein the glass transition temperature, Tg, is about 219°C (Vicat softening point, ASTM D-1525). A commercially available example of such resins is available under the tradename ULTEM® from General Electric Company, Pittsfield, MA 01201 U.S.A.

Fillers, pigments, dyes and other such conventional curing additives and processing aids may be added to the fiber matrix compositions of the invention before curing to influence the properties of the final resin composite.

The following examples will illustrate the practice of the present invention and are provided by way of demonstration and not by way of limitation.

Properties are determined by the following procedures: The flow is tested as described above. The tack of all of the following samples was observed to be acceptable for facile handling and forming. The flexural test is described in ASTM D-790, Method I. Dynamic mechanical analysis was performed on a Dupont 981 Dynamic Mechanical Analyzer, and Tg was defined as the temperature at which the loss tangent is a maximum. (ASTM D-4065 test method covers this type of Tg measurement.) Conditioning before testing is described by the terms "wet" and "dry", "wet" refering to immersion of the sample

for two weeks in distilled water at 71°C prior to testing, "dry" refering to testing the sample as prepared, at room temperature. "Hot/wet" testing was performed after "wet" conditioning, at 93°C.

EXAMPLE 1

A resin formulation was prepared from the following materials: (parts are by weight)

| | | parts |
|---|---|---|
| component (b)(i) | ARALDITE® MY-720 (see formula, supra.) | 60 |
| | EPON® 828 (see formula, supra.) | 40 |
| curing agent (b)(ii) | trimethylene bis(p-aminobenzoate) | 50 |
| polymer modifier (b)(iii) | polyetherimide of 2,2-bis (4-(3,4-dicarboxyphenoxy) phenyl) propane dianhydride and m-phenylenediamine (ULTEM®, General Electric Co.) | 20 |

The epoxide prepolymers, the curing agent and the resin modifier were mixed at 135°C for ten minutes, cooled to 100°C, and the mixture degassed for ten minutes. The neat resin formulation was then poured into a mold and cured two hours at 135°C and three hours at 180°C. The following properties were observed:

| | | |
|---|---|---|
| Modulus (MSI) | 0.50 (dry) | 0.36 (wet) |
| Strength (KSI) | 23.1 (dry) | |
| Strain (%) | 8.1 (dry) | |
| Work-to-break | 1250 in-lbs/$in^3$ (dry) | |
| Tg (°C) | 205 (dry) | 170 (wet) |

## EXAMPLE 2

Prepreg tapes were prepared by collecting and collimating CELION® 6K high-strain graphite fibers (Celenese Plastics and Specialty Co.) to form a flat, closely packed, unidirectional array which was aligned and mated with release paper coated with the following epoxy resin composition, in which the amount of polymer modifier was varied: (all parts are by weight)

| | parts |
|---|---|
| N, N, N',N'-tetraglycidyl-4,4'-diamino diphenyl methane | 100 |
| diaminodiphenyl sulfone | 32 |
| polymer modifier* | (varied) |
| catalyst** | 1.0 |

* ULTEM® 1000 (General Electric Co.)
** a boron trifluoride-ethylamine adduct and the reaction product of toluene-2,4-diisocyanate and dimethylamine were both tested.

The mated fibers and resin-coated paper were introduced through a pressure roller assembly at a temperature of about 190°F and a pressure of about 1000 lbs over 15 inch centers, which served to completely embed the fiber matrix in the resin. Several trials revealed that with amounts of polymer modifier of from about 2 parts (in 134 total parts) to about 20 parts (in 152 total parts) in the formulation afforded useful tack control, allowing unwinding of the tape, removal of the release paper and handling without tearing or splitting the tape. Above about 20 parts modifier, the flow was often unacceptibly low, causing incomplete coverage of the fibers. Significantly, the other mechanical properties of the cured tape were not adversely affected, and there was some tendency toward improved toughness, i.e., greater

impact strength, as more polymer modifier was added, suggesting that added strength is gained through interpenetrating polymeric networks as the prepreg cures.

EXAMPLE 3

A fiber resin matrix fabric prepreg prepared by coating a fabric of woven graphite fiber tows (each toe comprising approximately 3,000 graphite fibers) with the resin composition of Example 2 (with 2 parts modifier and 1 part boron trifluoride-ethylamine catalyst) produced a composite according to the invention having acceptable tack, flow and physical properties.

EXAMPLE 4

Rovings prepared by continuously dipping a bundle of 12,000 graphite fibers through compositions similar to those of Example 2 (with 8-10 parts modifier and 1 part boron trifluoride-ethylamine catalyst) produced rovings according to the present invention; however a level of modifier outside the range of 8-10 parts was not tested, so that range should not be interpreted as a limitation.

EXAMPLE 5

A resin composition is prepared by mixing the following (measurements are by weight)

| | | |
|---|---|---|
| (a) | N,N,N',N'-tetraglycidyl-4,4' diamino diphenyl methane | 120 parts |
| (b) | Polyether polyimide resin (General Electric ULTEM®, Example 1, above) | 15 parts |
| (c) | trimethylene bis(p-amino-benzoate) | 48 parts |
| (d) | Boron trifluoride-ethylamine complex (catalyst) | 0.5 parts |

A prepreg tape is prepared following the general procedure of Example 2, with 30%-45% (preferably 35%) resin content by weight and 55%-65% (preferably 60%) graphite fiber loading by volume.

Samples are formed into laminates of 8, 16 and 36 sheets, then cured. The 8-sheet laminates have unidirectional orientation for all the graphite fibers; the 16-sheet and 36-sheet laminates have varying orientations for the direction of the fibers such that equal numbers of plies are oriented (relative to each other) at 0°, ± 45° and 90°, respectively. The 8-sheet and 16-sheet laminates are tested for compressive strength by a method based on ASTM D-695 described in D.H. Woolsencraft et al, Composites, October, 1981, pp. 275-280. The 36-sheet laminates are tested for compressive strength after impact by subjecting a cured laminate specimen to 1500 inch-lbs/inch of nominal thickness impact with a 0.62 diameter spherical tip impactor while supported by a rigid base (e.g., 3" x 5" steel cutout), then tested in compression, as described in B.A. Byers, NASA Report No. CR159293, August, 1980. The laminates thus formed and tested are excellent quality composites. Most preferred ranges of the various components for this formulation are (a), 114-126 parts; (b), 14.25-15.75 parts; (c), 36.5-55.4 parts; and (d), 0.475-0.525 parts.

EXAMPLE 6

Prepreg tapes were prepared in the manner of Example 2 having a resin content of about 38 percent by weight and containing a concentration of modifying resin of about 2 parts per 100 of resin composition and multiples of 2, 4 and 6 times that amount of modifier. The tapes were cured and the following results observed:

| | Modifier Concentration | | | |
|---|---|---|---|---|
| | X* | 2X | 4X | 6X |
| flow (%) | 22.3 | 17.6 | 15.7 | 15.2 |
| gel time (min:sec) | 6:20 | 3:50 | 4:50 | 4:55 |
| short beam shear strength (KSI) | | | | |
| -at room temp. (dry) | 11.6 | 11.6 | 11.8 | 11.2 |
| -160°F (wet) | 8.9 | 8.6 | 8.8 | 9.1 |

* X = 2 parts modifier per 100 of resin composition.

EXAMPLE 7

A graphite roving having a resin content of approximately 32 percent by weight was prepared in the manner of Example 4, cured and tested for short beam shear strength, with the following results:

| | Short Beam Shear Strength (KSI) |
|---|---|
| room temp. | 17.0 |
| room temp. (wet)* | 15.4 |
| 160°F | 13.4 |
| 160°F (wet)* | 16.0 |

* "wet" in this case means immersion in water at 160°F for one week.

The above-mentioned patents, applications and publications are incorporated herein by reference. It is seen that the present invention produces articles of manufacture with benefical properties, making them useful in a variety of applications. Many variations will suggest themselves to those skilled in this art in light of the foregoing detailed description, however all such obvious variations are within the full intended scope of the appended claims.

,597

WHAT IS CLAIMED IS:

1. A fiber resin matrix composite comprising:

(a) reinforcing filaments,

(b) a heat-curable epoxy resin composition comprising:

(i) an epoxy prepolymer or combination of prepolymers having more than one epoxide group per molecule,

(ii) an amount effective to promote cure of an amine functional curing agent, and

(iii) a heat-resistant and moisture-resistant modifying resin component blended and alloyed with (b)(i) and (ii) in an amount at least sufficient to control the tack of the composite but not in excess of an amount which decreases the flow of component (b) below a level which adversely affects the resin density in the composite.

2. A fiber resin matrix composite as defined in Claim 1 wherein component (b)(iii) comprises from about 1.5 to about 15 parts by weight per 100 parts by weight total of components (b)(i) and (b)(ii).

3. A fiber resin matrix composite as defined in Claim 1 wherein the glass transition temperature of component (b)(iii) is at least about 180°C.

4. A fiber resin matrix composite as defined in Claim 1 wherein the wet glass transition temperature, of cured components (a), (b)(i), (b)(ii) and (b)(iii),

is in the range of at least about 90% of the wet glass transition temperature of the cured components (a), (b)(i) and (b)(ii).

5. A fiber resin matrix composite as defined in Claim 2 wherein the flow is below about 12-14 percent.

6. A fiber resin matrix composition as defined in Claim 5 wherein the flow is in the range of about 5.5 to 7.7 percent.

7. A fiber resin matrix composite as defined in Claim 1 wherein the physical configuration of the components (a) and (b) together form a tape.

8. A fiber resin matrix composite as defined in Claim 1 wherein the physical configuration of the components (a) and (b) form a roving.

9. A fiber resin matrix composite as defined in Claim 1 wherein the physical configuration of the components (a) and (b) form a fabric.

10. A fiber resin matrix composite as defined in Claim 1 wherein the heat- and moisture-resistant resin modifier component (b)(iii) comprises a polyimide resin.

0159482

1/1

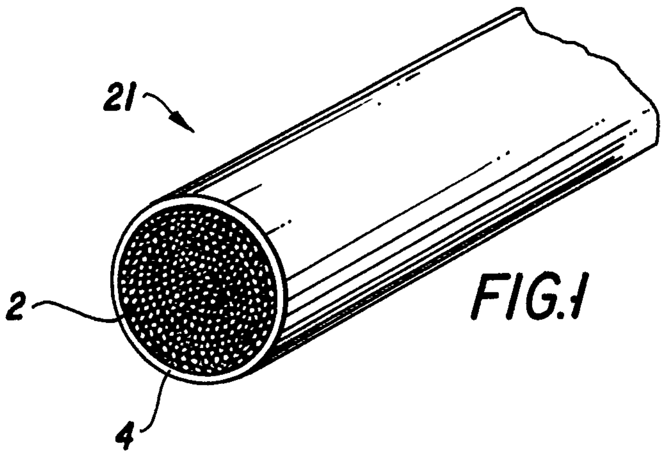


FIG.1

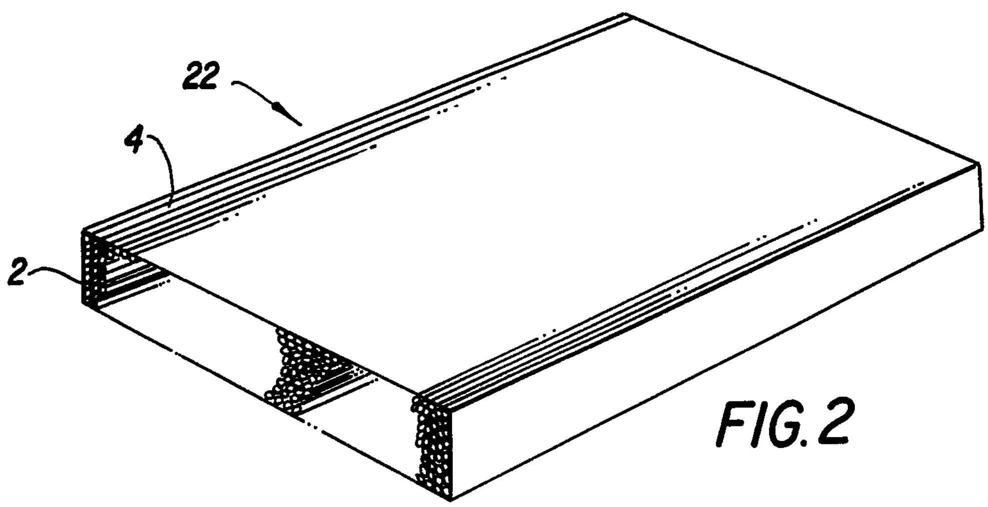


FIG.2

FIG.3